# EUROPEAN PATENT SPECIFICATION

(11) **EP 2 433 813 B1**
(45) Date of publication and mention of the grant of the patent: **19.06.2013**
(21) Application number: 11182786.1
(22) Date of filing: 26.09.2011
(51) Int. Cl.: B60C 1/00, C08L 7/00, C08L 21/00, C08K 3/04, C08L 91/08, C08L 97/00

(54) **Wire coat compositions for rubber articles**
Drahtschichtzusammensetzung für Kautschukartikel
Compositions de revêtement de câbles pour articles en caoutchouc

(30) Priority: 28.09.2010 US 892204
(43) Date of publication of application: 28.03.2012
(73) Proprietor: The Goodyear Tire & Rubber Company, Akron, OH 44316-0001 (US)
(72) Inventor: Halasa, Adel Farhan, Bath OH Ohio 44333 (US); Verthe, John Joseph Andre, Kent OH Ohio 44240 (US); Lechtenboehmer, Annette, 9048 Ettelbruck (LU)
(74) Representative: Kutsch, Bernd

(56) References cited:
- EP-A1- 0 901 914
- EP-A1- 1 352 923
- EP-A1- 1 371 680
- EP-A1- 1 818 186
- EP-A1- 2 223 928
- WO-A1-2009/145784
- GB-A- 929 533
- US-A1- 2009 099 281

## Description

### Field of the Invention

Metallic reinforcing elements are often embedded in rubber articles, such as tires, hoses and belts, to provide them with greater strength. Good rubber to metal adhesion is typically very important in such rubber articles for them to maintain their strength. This invention discloses rubber formulations that offer excellent adhesion to metal and which maintain high levels of adhesion to metal after being aged under conditions of high humidity.

### Background of the Invention

It is often desirable to reinforce rubber articles by incorporating therein metal reinforcing elements. For example, tires, conveyor belts, power transmissions belts, timing belts, hoses, and a variety of other rubber articles are often reinforced with metal elements to improve the strength and durability thereof. In order for such rubber articles to function effectively it is imperative for good adhesion between the rubber and the metal reinforcing element be maintained throughout the service life of the article.

Methods of improving metal to rubber adhesion have been the subject of considerable experimentation and research over the years. Various solutions have been suggested which have provided various degrees of success. For example, various physical configurations of cabled wire filaments have been used to enhance physical or mechanical adhesion to rubber. Also, the surface of wire filaments has been treated by various materials and methods to enhance their adhesion to rubber. For example, pneumatic vehicle tires are often reinforced with cords prepared from steel filaments which are coated with brass.

Steel is very prone to oxidation, which even in minor degrees is highly deleterious to rubber-metal adhesion. Thus, generally steel reinforcement elements are coated with brass in order to facilitate rubber-metal adhesion. Normally steel reinforcing elements are coated with brass that is an alloy of only copper and zinc. However, ternary brass alloys that are useful for coating steel reinforcing elements are known by those skilled in the art. For example, US-B- 4,347,290 and US-B-4,446,198 disclose a ternary brass alloy containing copper, zinc, and cobalt. Coating steel reinforcing elements with ternary brass alloys containing copper, zinc, and iron is also known to be effective in improving rubber to metal adhesion.

Steel reinforcing elements can be provided with work-hardened nickel coatings in order to improve the steel's resistance to static fatigue corrosion. US-B-3,749,558 discloses a steel tire reinforcement coated with a layer of nickel which is covered by a brass outer coating. Thus, it is known to coat metal reinforcing elements with various alloys to improve the reinforcing elements adhesion to the rubber in which it is embedded. It is also known to treat metal reinforcing agents with various chemicals in order to improve their adhesion to rubber. For instance, US-B- 3,586,568 discloses a process for treating such a metal reinforcing element with a mixture of chromic acid and phosphoric acid in order to improve the metals bonding to elastomeric materials.

US-B- 3,991,130 discloses a method for improving adhesion between vulcanizable elastomeric compositions and metal surfaces by incorporating into the elastomer an organo-nickel salt and then subsequently vulcanizing the elastomeric composition while it is in contact with the metal surface.

US-B- 4,513,121 discloses a rubber skim stock containing organo-cobalt compounds as adhesion promoters. Representative examples of such organo-cobalt compounds include cobalt salts of fatty acids, cobalt salts of aliphatic or alicyclic carboxylic acids having from 6 to 30 carbon atoms, cobalt chloride, cobalt naphthenate, cobalt carboxylate and organo-cobalt-boron complexes. However, there are problems associated with the use of such organo-cobalt compounds include their availability and strong pro-oxidant properties which can adversely affect the rubber by accelerating oxidation. US-B- 5,792,800 indicates that esters of aminobenzoic acid can be used as a replacement in whole or in part for conventional cobalt materials used in wire coat stocks to attain and maintain needed rubber-to-wire adhesion properties.

US-B- 6,662,840 discloses a rubber stock for tire bead wire compounds which comprises based on 100 parts by weight of rubber from 5 to 40 weight percent of a carboxylated acrylonitrile-diene rubber having an acrylonitrile content ranging from 15 to 45 percent by weight, from 60 to 95 weight percent of a non-carboxylated rubber selected from the group consisting of natural rubber, polyisoprene, polybutadiene, styrene-butadiene rubber, styrene-isoprene-butadiene rubber, styrene-isoprene rubber, isoprene-butadiene rubber and mixtures thereof, from 0.1 to 10 phr of a methylene acceptor, and from 0.1 to 10 phr of a methylene donor.

EP-A- 2 223 928 discloses the use of functionalized lignin as a reinforcing filler for rubber formulations. These rubber formulations can be used in various tire components, including treads, innerliners, sidewall carcass ply, and wire coat. The lignin is functionalized with an amine, acrylate, methacrylate, thiol, isonitrile, nitrile, isocyanate, allyl, olefin, alkyne, ester, epoxy, sulfide, haloalkane, perhaloalkane, amide, carbonate, carbamate, sulfonyl, azidosulfonyl, sulfolane, hydroxyl, or aryl functional group.

US-A- 2009/0099281 discloses the use of lignin derivatives in rubber compositions to improve the rolling resistance of pneumatic tires.

Further rubber compositions for wire reinforcement or comprising lignin are described in EP-A- 1 352 923, EP-A- 1 818 186, EP-A- 1 371 680, EP-A- 0 901 914, WO-A- 2009/145784 and GB-A- 929 533.

### Summary of the Invention

The invention relates to a wire coat stock in accordance with claim 1, a composite in accordance with claim 9, and a tire in accordance with claim 12 or 14 respectively.

Dependent claims refer to preferred embodiments of the invention.

The present invention is based upon the unexpected finding that lignin can be incorporated into wire coat stock composition to improve metal to rubber adhesion. It has been further found that lignin can be used as a replacement in whole or in part for conventional rubber-to-metal adhesion promoters, such as cobalt materials which are conventionally used in wire coat stocks to attain and maintain needed rubber-to-wire adhesion properties. In fact, wire coat stocks that contain lignin provide more that adequate rubber-to-metal adhesion characteristics for typical applications, such as in tires, and maintain needed levels of adhesion over long periods of product service. For instance, high levels of rubber-to-metal adhesion are maintained under harsh conditions, such as exposure to elevated temperatures and high levels of humidity, than can be attained utilizing conventional rubber-to-metal adhesion promoters, such as cobalt salts.

The utilization of lignin in wire coat stock formulations in accordance with this invention is also economically advantageous since lignin is a low cost alternative to most conventional adhesion promoting agents. Lignin is also environmentally friendly and is typically not hazardous to use in industrial applications. Lignin is derived from wood in large quantities in paper making operations and constitutes 25 percent to 33 percent of the dry mass of wood. Accordingly, lignin is an abundant naturally occurring organic polymer which is a renewable resource since it is derived from trees. Accordingly, lignin represents a low cost, abundant, environmentally friendly, and highly effective alternative to conventional rubber-to-metal adhesion promoters.

In the practice of this invention, the best initial rubber-to-metal adhesion and humidity aged rubber-to-metal adhesion is attained by utilizing a combination of lignin and a cobalt salt in the wire coat stock. This combination of lignin and the cobalt salt leads to a higher level of initial rubber-to-metal adhesion and humidity aged adhesion than can be attained utilizing either the lignin or the cobalt salts alone. The lignin and the cobalt salt accordingly work in a synergistic manner to improve adhesion characteristics. Unexpectedly, after being subjected to humidity aging a very large percentage of initial rubber-to-metal adhesion is retained. This is an extremely important characteristic since many formulations that offer acceptable initial rubber-to-metal adhesion fail to retain adequate adhesion characteristics after being aged in a humid environment. Accordingly, such formulations do not offer the level of service life that is needed in commercial applications. Thus, the wire coat formulations of this invention offer a unique and highly beneficial combination of rubber-to-metal adhesion characteristics.

The wire coat stocks of this invention help to prevent delamination of metal reinforcing elements in tires and other reinforced rubber products. The problem associated with delamination of steel reinforcing cords is particularly pronounced in truck tires and the large tires used on industrial and construction equipment, such as giant earth movers. In fact, in such applications, tires frequently fail due to delamination of steel containing reinforcement layers while the tire still has a fair amount tread life. Thus, large industrial tires frequently fail because of a loss of rubber-to-metal adhesion rather than by virtue of the tire tread being worn out. The incorporation of lignin into the wire coat stocks used in truck tires, tires for large industrial equipment, and earthmover tires is of particular benefit. This is particularly true in the case of large tires having cords that contain at least 10 cabled filaments, such as earth mover tires that contain 30 to 50 cabled filaments.

The present invention more specifically discloses a wire coat stock composition which comprises a rubbery polymer, 40 phr to 80 phr of carbon black, and 2 phr to 30 phr of lignin.

The subject invention further reveals a composite comprising a cured rubber composition with a metal reinforcing element embedded therein, wherein said rubber composition comprises a rubbery polymer, 40 phr to 80 phr of carbon black, and 2 phr to 30 phr of lignin.

The present invention more specifically discloses a pneumatic tire which comprises a generally toroidal-shaped carcass with an outer circumferential tread, two spaced beads, at least one ply preferably extending from bead to bead and sidewalls extending radially from and connecting said tread to said beads, wherein said tread is adapted to be ground-contacting, wherein the beads comprise steel, and wherein the beads are coated with a wire coat stock compound which is a cured rubber composition which is comprises a rubbery polymer, 40 phr to 80 phr of carbon black, and 2 phr to 30 phr of lignin.

The subject invention also reveals a pneumatic tire which comprises a generally toroidal-shaped carcass with an outer circumferential tread, two spaced beads, at least one ply preferably extending from bead to bead and sidewalls extending radially from and connecting said tread to said beads, wherein said tread is adapted to be ground-contacting, wherein said ply is reinforced with steel wires, and wherein the steel wires are coated with the wire coat stock composition which comprises a rubbery polymer, 40 phr to 80 phr of carbon black, and 2 phr to 30 phr of lignin.

The subject invention also reveals a pneumatic tire which comprises a generally toroidal-shaped carcass with an outer circumferential tread, two spaced beads, at least one ply preferably extending from bead to bead and sidewalls extending radially from and connecting said tread to said beads, an innerliner which covers the inner surface of said pneumatic tire, wherein said tread is adapted to be ground-contacting, wherein the innerliner comprises a halobutyl rubber, a filler and lignin. In this embodiment of the invention the incorporation of lignin into the innerliner of the pneumatic tire prevents the migration of moisture into the tire carcass. This accordingly protects steel cords within the tire from moisture which can lead to corrosion and consequential delamination of steel cords and belts within the tire. Preferably the lignin will be included in such innerliner formulations in an amount which is within the range of 1 phr to 20 phr and will more typically be included at a level within the range of 5 phr to 15 phr. In such tires the halobutyl rubber will typically be a chlorobutyl rubber or a bromobutyl rubber which are included because they exhibit excellent impermeability to gases such as air. In such innerliners, it is preferred for the halobutyl rubber to constitute the bulk (at least 80%) of the rubber in the innerliner formulation.

Lignin can also advantageously be used to protect the steel belts in tires by incorporating it into other tire components which are located between the innerliner and the belts. For instance, a second barrier layer can be located underneath the belts to prevent moisture migration (between the ply and the belts or between the innerliner and the ply). This barrier layer may have the composition of the wire coat stock composition described above.

### Detailed Description of the Invention

The materials to which this invention is primarily directed, rubbers reinforced with metals, are within the general class of materials known as composites. A composite is a complex material containing two or more distinct and structurally complimentary substances (in this case rubber and metal) which are combined to produce desirable structural and/or functional properties not present in either individual component. For example, steel belts can be incorporated into a pneumatic rubber tire to attain desirable properties that cannot be achieved if the tire is built with rubber alone. In order for the metal and rubber to compliment each other in such composites it is necessary for there to be good adhesion between the rubber and the metal.

Numerous types of rubber articles contain metal elements as structural reinforcements. Some examples of rubber articles that quite frequently contain metal reinforcing elements include tires, power transmission belts, conveyor belts, hoses, and a wide variety of other manufactured rubber products and component parts for industrial and consumer goods. Such rubber articles are composites containing a rubber portion and a metal portion. The rubber in the composite articles of this invention can be selected from a wide variety of rubbery polymers. Some representative examples of rubbers commonly used in the composites of this invention include natural rubber, synthetic polyisoprene rubber, styrene-butadiene rubber, polybutadiene rubber, isoprene-butadiene rubber, styrene-isoprene butadiene rubber, nitrile rubbers, hydrogenated nitrile rubbers, carboxylated nitrile rubbers, butyl rubbers, halogenated butyl rubbers, EPDM (ethylene-propylene-diene) rubbers, epichlorohydrin homo and copolymers, EPR (ethylene-propylene) rubbers, polyisobutylene, norbornene rubbers, and blends of various combinations of these and other diene rubbers.

Wire coat stocks that are utilized in manufacturing tires typically contain at least 50 weight percent natural rubber and/or synthetic polyisoprene rubber. Wire coat stocks for utilization in tires more typically contain at least 80 weight percent natural rubber and/or synthetic polyisoprene rubber and normally contain at least 90 weight percent natural rubber and/or synthetic polyisoprene rubber. It is frequently preferred for the wire coat stock employed in manufacturing tires to contain at least 95 weight percent natural rubber and/or synthetic polyisoprene rubber. In many cases the rubber utilized in wire coat stocks for tires will consist essentially of natural rubber and/or synthetic polyisoprene rubber.

A wide variety of synthetic rubbers can be utilized in conjunction with natural rubber and/or synthetic polyisoprene rubber in the rubber component of wire coat stocks that are utilized in manufacturing tires. However, as previously noted, these synthetic rubbers will normally be employed at a level of less than 50 weight percent based upon the total amount of rubber included in the wire coat stock. Some representative examples of synthetic rubbers that can be used in conjunction with natural rubber and/or synthetic polyisoprene rubber in such wire coat stocks include cis-1,4-polybutadiene rubber, styrene-butadiene rubber, isoprene-butadiene rubber, styrene-isoprene butadiene rubber, nitrile rubbers, hydrogenated nitrile rubbers, carboxylated nitrile rubbers, hydrogenated carboxylated nitrile rubbers, EPDM (ethylene-propylene-diene) rubbers, EPR (ethylene-propylene) rubbers, and blends of various combinations of these and other diene rubbers.

Many terms are used to describe the metal reinforcing elements used to strength rubber articles. The terms "cord", "bead", "tire cord", "tire bead", "cable", "strand", "wire", "rod", "plate", and "filament" can all be used to describe metal reinforcing elements used to strength rubber articles. The term "metal reinforcement" as used herein is devised to be generic to all articles for reinforcing rubber articles including those listed above. Thus, without being limited thereto, a metal reinforcement can be a metal wire, a metal cord, a metal tire cord, a metal tire bead, a metal cable, a metal strand, a metal rod, a metal plate, a metal wire, a metal ply, or a metal filament. The term "bead" as used herein means that part of a tire comprising an annular tensile member wrapped by ply cords and shaped, with or without other reinforcement elements such as flippers, chippers, apexes, toe guards and chafers, to fit the design rim. The term wire coat stock as used herein means the rubber composition which is used to coat the metal reinforcement without regard to it particular form. For instance, the term "wire coat stock" is intended to encompass compositions that are used in coating metal beads and metal plys.

The metal reinforcements used in the practice of this invention can have a wide variety of structural confirmations, but will generally be metal beads, cords, cables, or wires. For example, a wire cord used in the practice of this invention can be composed of 1 to 50 or even more filaments of metal wire which are twisted or cabled together to form a metal cord. Therefore, such a cord can be monofilament or can be composed of multiple filaments. As a general rule, cords are composed of at least four filaments. For example, the cords used in automobile tires generally are composed of three to six cabled filaments, the cords used in truck tires normally contain 10 to 30 cabled filaments, and the cords used in giant earth mover tires generally contain 40 to 50 cabled filaments.

The metal generally used in the reinforcing elements of this invention is steel. The term steel as used in the present specification and claims refers to what is commonly known as carbon steel, which is also called high-carbon steel, ordinary steel, straight carbon steel, and plain carbon steel. An example of such a steel is American Iron and Steel Institute Grade 1070-high-carbon steel (AISI 1070). Such steel owes its properties chiefly to the presence of carbon without substantial amounts of other alloying elements. However, improved strength, corrosion resistance, and durability can be attained by utilizing certain steel alloys. For instance, US-B- 4,960,473, US-B- 5,066,455, US-B- 5,167,727, US-B- 5,229,069, and US-B- 6,662,840 relate to steel alloys for use in manufacturing reinforcing wires for rubber products, such as tires, which can be patented in a low-cost process due to their having a very fast rate of isothermal transformation.

In should be noted that patenting is a process that typically consists of first heating the alloy to a temperature within the range of 850ºC to 1150ºC to form austenite, and then cooling at a rapid rate it to a lower temperature at which a transformation occurs which changes the microstructure from face-centered cubic to body-centered cubic and which yields the desired mechanical properties. Patenting is normally conducted as a continuous process and in many cases, while it is desired to form a single allotrope, a mixture of allotropes having more than one microstructure is, in fact, typically produced.

US-B- 6,662,840 discloses steel filaments made with steel alloys that have an outstanding combination of strength and ductility. The steel alloys can be manufactured into filaments having a tensile strength in the range of 4000 MPa to 5000 MPa. Additionally, these can be patented in a low-cost process due to their having a very fast rate of isothermal transformation. This allows the steel in the steel wire being patented to transform from a face-centered cubic microstructure to an essentially body-centered cubic microstructure within a very short period. US-B-6,662,840 more specifically discloses a steel alloy composition which is particularly suitable for use in manufacturing reinforcing wire for rubber products which consists essentially of (a) iron, (b) 1.05 to 1.7 weight percent carbon, (c) 0.2 to 0.8 weight percent manganese, (d) 0.1 to 0.8 weight percent silicon, (e) 0.1 to 0.7 weight percent chromium, (f) 0.0 to 0.5 weight percent nickel, (g) 0.0 to 0.3 weight percent copper, (h) 0.0 to 0.5 weight percent molybdenum and (i) 0.0 to 0.5 weight percent vanadium; with the proviso that the carbon equivalent of the steel alloy is within the range of 1.15 to 1.8 weight percent. The teachings of US-B- 6,662,840 are incorporated herein by reference for the purpose of teaching specific steel alloys and patenting techniques that can be utilized in accordance with this invention.

It is generally preferred for steel reinforcements to be individually coated or plated with a transition metal or alloy thereof. Some representative examples of suitable transition metals and alloys thereof include: zirconium, cerium, lanthanum, nickel, cobalt, tin, titanium, zinc, copper, brass, and bronze. Brass is an alloy of copper and zinc which can contain other metals in varying lesser amounts and bronze is an alloy of copper and tin which sometimes contains traces of other metals. The metal reinforcements which are generally most preferred for use in the practice of this invention are brass plated carbon steels. Alpha brass, which contains from 62 to 75 percent copper and 38 to 25 percent zinc, is preferred for coating the metal reinforcements of this invention.

It is well recognized that steel reinforcements can be plated or coated with transition metals or alloys by various methods to obtain a thin coating. It is generally preferable for this coating to be monomolecular and somewhat microporous in nature. In general, the metal reinforcing elements of this invention should be coated, if desired, to a final thickness (after drawing) of from 0.05 microns to 0.40 microns. It is generally most preferred for the steel reinforcements of this invention to be coated with brass alloys to a final thickness of from 0.12 microns to 0.25 microns. The optimum thickness of the transition metal or alloy plating is a function of numerous variables, such as the nature of the metal being coated, the nature of the transition metal or alloy, the mode of deposition, the thickness of the initial oxide layers, the magnitude of residual stresses, and the reactivity of the rubber vulcanization system.

Transition elements and alloys thereof can be coated onto steel reinforcing elements by using any technique that will result in a coating layer of desired thickness and composition. One means of applying such a coating is to dip the steel reinforcing element into a molten bath of the transition metal or alloy. A more practical technique for applying such a coating is electroplating or electrodeposition. For example, a steel element can be plated with brass by applying a layer of copper and a layer of zinc to the steel element followed by heating the steel reinforcing element to a temperature high enough to promote the diffusion of the copper and zinc (at least 450ºC). The copper and zinc layers can be electroplated onto the steel reinforcing element in any order. It has been found to be convenient to first apply a copper layer and then to apply a zinc layer as the final step in the electroplating process. The copper and zinc layers should be electroplated onto the steel reinforcement in the proportion that it is desired for them to represent in the brass alloy coating.

Numerous electroplating techniques can be employed to deposit the copper and zinc layers onto steel reinforcing elements. A copper layer can be electroplated onto a steel element utilizing a plating solution containing copper cyanide or copper pyrophosphate. A copper pyrophosphate electroplating solution typically contains 22 to 38 grams of copper per liter and 150 to 250 grams of P₂O₇-ions per liter (the ratio of P₂O₇-ions to copper ions is from about 6 to 8) with the pH of the solution being in the range of from 8 to 9.3. The pH of such a solution can be kept in this range by the addition of an alkaline aqueous solution of potassium hydroxide or with pyrophosphoric acid (H₄P₂O₇). It is generally preferred for copper pyrophosphate electroplating solutions to contain about 31 grams of copper ion per liter and 210 grams of P₂O₇-ion per liter with the pH of the solution being 8.8 to 9.2. Copper is generally electroplated onto steel elements from copper pyrophosphate plating solution utilizing a current density of 8 to 18 amps per square decimeter at a temperature of 50ºC to 60ºC.

Numerous electroplating solutions can be employed for depositing a zinc layer onto steel reinforcing elements. Some representative examples of such aqueous solutions include solutions of zinc cyanate, zinc sulfate, zinc chloride, zinc fluoroborate and zinc pyrophosphate. A typical zinc sulfate electroplating solution will contain from 40 to 90 grams of zinc-ion per liter of solution and have a pH of 1 to 4.5. A more preferred zinc sulfate electroplating solution will contain 80 grams of zinc-ion per liter of solution and have a pH of 3 to 3.7. Zinc layers are generally deposited from such zinc sulfate electroplating solutions utilizing a cathode current density of 20 to 30 amps per square decimeter at a temperature ranging from 16ºC to 28ºC with ambient temperature normally being preferred.

The two distinct layers of copper and zinc which can be sequentially electroplated onto a steel reinforcing element can be diffused together to form a brass alloy by simply heating the steel reinforcing element on which they are deposited to a temperature of at least 450ºC, preferably 500ºC for a few seconds (2 to 10 seconds). Typically, brass coated steel reinforcing wire is further drawn to the final desired filament diameter.

The plated metal reinforcements of this invention can be coated with a protective material, such as benzotriazole prior to application of the compounded rubber composition. Such protective coatings serve as a barrier to environmental degradation of the underlying metal reinforcement.

The lignin used in the practice of this invention is a complex naturally occurring biopolymer which is recovered from wood. In the kraft process for making high quality paper lignin is removed from the pulp so that the paper can be bleached and will not subsequently yellow. Typically, the lignin recovered from pulp in paper making facilities is burned for its fuel content. Approximately 50,000,000 tons of lignin is produced annually. Accordingly, abundant supplies of relatively inexpensive lignin are readily available from a number of sources. Lignin typically has a molecular weight of at least 10,000 and has been assigned CAS number 9005-53-2. Lignin is typically a terpolymer of p-coumaryl alcohol, coniferyl alcohol, and sinapyl alcohol. However, additional monomeric repeat units can be present in lignin. These lignol monomers are incorporated into lignin in different proportions depending upon the source of the lignin as p-hydroxyphenyl (H), guaiacyl (G), and syringal (S) phenylpropanoid repeat units. Lignin which is derived when pulping black liquor is precipitated, neutralized by acid washing and then drying to solid form is available from Weyerhaeuser Company, Federal Way, Washington.

Lignin can be mixed into the desired rubber to make the wire coat stocks of this invention using ordinary compounding techniques. Generally, it will be convenient to mix the lignin into the rubber composition of this invention simultaneously with carbon black and other desired compounding ingredients using any suitable mixing equipment known to those skilled in the art, such as a Banbury mixer or mill mixer. Normally the rubber compositions used in the composites of this invention will be compounded with sulfur or a sulfur containing compound as a curing agent. Numerous mineral fillers, such as clay and silica can also be included in the wire coat stock. The wire coat stocks of this invention will also commonly contain cure accelerators, scorch inhibitors, antidegradents, pigments, and processing oils.

The wire coat stocks of this invention will normally contain a sufficient amount of filler to contribute a reasonably high modulus and high resistance to tear. The wire coat stock will normally contain carbon black as a filler in an amount which is within the range of 40 phr (parts by weight per 100 parts by weight of rubber) to 80 phr. Additional, fillers, such as silica, clays, starch, calcium silicate, and/or titanium dioxide, can also be included in the wire coat stocks of this invention with the total amount of filler included being within the range of 50 phr to 250 phr. In most cases, the total amount of filler utilized in the wire coat stock composition will be within the range of 90 phr to 160 phr. In most cases the filler will include from 45 phr to 70 phr of carbon black and will preferably include 50 phr to 65 phr of carbon black. It should be noted that the wire coat stocks of this invention can utilize carbon black alone without including any addition fillers. In most cases, the filler will consist essentially of carbon black with the wire coat stock being void of silica, starch, clays, calcium silicate and titanium dioxide.

To attain the best possible overall combination of rubber-to-metal adhesion characteristics the wire coat stocks of this invention will also contain a small amount of a cobalt containing compound. Suitable cobalt materials that can be employed include cobalt salts of fatty acids, such as stearic, palmitic, oleic, linoleic and the like; cobalt salts of aliphatic or alicyclic carboxylic acids having from 6 to 30 carbon atoms, such as cobalt neodecanoates; cobalt chloride, cobalt naphthenates; cobalt boroacylates, and cobalt carboxylates. Manobond® adhesion promoters which are commercially available from OM Group, Inc. of Cleveland, Ohio, can also be utilized beneficially. Manobond® adhesion promoters are believed to be an organo-cobalt-boron complex having the structure: 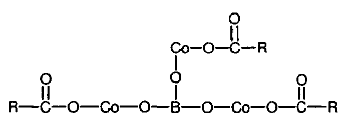 in which R represents is an alkyl group containing from 9 to 12 carbon atoms.

Amounts of the organo-cobalt compound that should be employed depend upon the specific nature of the cobalt material selected, particularly the amount of cobalt metal present in the compound. The amount of the cobalt material utilized will typically be within the range of 0.1 phr to 1.5 phr. The amount of the cobalt compound utilized in the wire coat stock will more typically be within the range of 0.2 phr to 1.25 phr. The amount of the cobalt compound utilized in the wire coat stock will preferably fall within the range of 0.4 phr to 1 phr. The amount of the cobalt compound utilized in the wire coat stock will more preferably fall within the range of 0.5 phr to 0.9 phr. The amount of the cobalt compound utilized in the wire coat stock will most preferably fall within the range of 0.6 phr to 0.7 phr. Level of the cobalt compound in excess of 1.0 phr are typically not utilized since greater amounts appear to have an adverse effect on adhesion characteristics. On the other hand, if the cobalt compound is not employed at a level of at least 0.2 phr its ability to act synergistically with the lignin to improve initial and humidity aged rubber-to-metal adhesion is limited.

Representative examples of reinforcing type carbon blacks that can be employed in the wire coat stocks of this invention include N326, N330, N332, N339, N343, N347, N351, N358, N375, N539, N550, N582, N650, N660, N683, N754, N762, N765, N774, and N787. Such types of carbon black are characterized by an Iodine absorption ranging from 9 to 100 g/kg and a DBP number ranging from 34 to 140 cm³/100 gram.

In order to cure the wire coat stock it is important to include a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. The amount of sulfur vulcanizing agent will vary depending on the application and the other constituents in the wire coat stock as well as the particular type of sulfur vulcanizing agent that is used. Generally speaking, the amount of sulfur vulcanizing agent that should be included in the wire coat stock will be within the range of 0.1 phr to 8 phr. The amount of sulfur vulcanizing agent utilized will more typically be within the range of 1.5 phr to 6 phr.

Conventional rubber additives may be incorporated in the wire coat stocks of the present invention. These additives include plasticizers, cure accelerators, processing oils, retarders, antiozonants, antioxidants and the like. Plasticizers are conventionally used in amounts ranging from 2 phr to 50 phr with amounts in the range of 5 phr to 30 phr being more typical. The amount of plasticizer used will depend upon the softening effect desired. Examples of suitable plasticizers include aromatic extract oils, petroleum softeners including asphaltenes, naphthenic oil, saturated and unsaturated hydrocarbons and nitrogen bases, coal tar products, cumarone-indene resins and esters such as dibutylphthalate and tricresyl phosphate. Materials used in compounding which function as an accelerator-activator includes metal oxides such as zinc oxide, magnesium oxide and litharge which are used in conjunction with acidic materials such as fatty acid, for example, stearic acid, oleic acid, murastic acid, and the like. The amount of the metal oxide may range from 1 phr to 10 phr with a range of from 2 phr to 8 phr being preferred. The amount of fatty acid which may be used will range from 0.25 phr to 5.0 phr with a level within the range of from 0.5 phr to 2 phr being preferred.

Accelerators may be used to control the time and/or temperature required for vulcanization of the rubber stock. As known to those skilled in the art, a single accelerator may be used which is present in amounts ranging from 0.2 phr to 2 phr. In the alternative, combinations of two or more accelerators may be used which consist of a primary accelerator which is generally used in a larger amount (0.3 phr to 2.0 phr), and a secondary accelerator which is generally used in smaller amounts (0.05 phr to 0.50 phr) in order to activate and improve the properties of the wire coat stock. Delayed action accelerators known to those skilled in the art can also be used. Suitable types of accelerators include amines, disulfides, guanidines, thioureas, thiazoles, thiurams, sulfenamides, dithiocarbamates and the xanthates. Examples of specific compounds which are suitable include zinc diethyldithiocarbamate, 4,4'-dithiodimorpholine, N,N-di-methyl-S-tert-butylsulfenyldithiocarbamate, tetramethylthiuram disulfide, 2,2'-dibenzothiazyl disulfide, butyraldehydeaniline mercaptobenzothiazole, N-oxydiethylene-2-benzothiazolesulfenamide and N-cyclohexyl-2-benzothiazolesulfenamide. In many cases it is preferred to utilize a sulfonamide as the accelerator.

Scorch retarders can also be included in the wire coat stocks of this invention. Some representative examples of scorch retarders that can be used include phthalic anhydride, salicyclic acid, sodium acetate, and N-cyclohexyl thiophthalimide. Scorch retarders are generally used in an amount which is within the range of 0.1 phr to 0.5 phr. Preformed phenol-formaldehyde type resins can also be incorporated into the wire cost stocks of this invention and are typically employed at a level which is within the range of 1.0 phr to 5.0 phr with amounts in the range of 1.5 phr to 3.5 phr being more typical.

Conventional antidegradants, such as antioxidants and antiozonants are typically included in the wire coat stocks of this inventon. Some representative antidegradants that can be used include monophenols, bisphenols, thiobisphenols, polyphenols, hydroquinone derivatives, phosphites, thioesters, naphthyl amines, diphenyl-p-phenylenediamines, diphenylamines and other diaryl amine derivatives, para-phenylenediamines, quinolines and mixtures thereof. Specific examples of such antidegradants are disclosed in The Vanderbilt Rubber Handbook (1990), pages 282 through 286. Antidegradants are generally used in the wire coat stocks of this invention at levels which are within the range of 0.25 phr to 5.0 phr with levels in the range of 1.0 phr to 3.0 phr being preferred.

The composite articles of this invention having rubber reinforcement can be produced by following a procedure which comprises: (1) preparing a rubber composition which contains lignin as an adhesion promoter, (2) surrounding the metal reinforcement with the rubber composition to conform to the desired shape of the rubber composite article being produced, and (3) curing (vulcanizing) the rubber article. Thus, standard techniques well-known to those skilled in the art for manufacturing rubber articles with metal reinforcing elements embedded therein can be employed in this invention. In other words, metal reinforcements can be incorporated into the rubber articles of this invention using the same techniques that are employed in incorporating metal reinforcements into ordinary rubber articles. Generally, reinforcing elements are simply surrounded by the uncured wire coat stock containing the lignin as an adhesion promoter in a mold and vulcanized to produce the desired rubber article which has the metal reinforcement embedded therein (the composite). Accordingly, the metal reinforcing element which is coated with the wire coat stock will be at least partially embedded or encapsulated within the cured rubber.

The mixing of the lignin and carbon black filler into the rubbery polymer in making the wire coat stock can be accomplished by methods known to those having skill in the rubber mixing art. For example, the ingredients are typically mixed in at least two stages, namely at least one non-productive stage followed by a productive mix stage. The rubbery polymer, lignin, and carbon black are typically mixed together in a non-productive mixing stage in the absence of curatives. The curatives are typically mixed into the non-productive blend in a final stage which is conventionally called the "productive" mix stage in which the mixing typically occurs at a temperature lower than the temperature used in mixing the ingredients in the preceding non-productive mix stage or stages. Cobalt compounds that are used in conjunction with lignin as adhesion promoters are typically mixed into the rubber in the non-productive mixing stage. The sulfur and accelerator are, of course, generally mixed in the productive mix stage.

The wire coat stock is typically cured at a temperature which is within the range of 125ºC to 180ºC. The wire coat stock is more typically cured at a temperature which is within the range of 135ºC to 1600ºC.

The wire coat stocks or bead coat stocks of this invention can be used encapsulate the metal reinforcements used in manufacturing rubber hose, power transmission belts, conveyor belts, and tires. The wire coat stocks of this invention are of particular value in manufacturing pneumatic tires for automobiles, busses, trucks, motorcycles, aircraft, heavy industrial equipment, mining vehicles, and heavy construction equipment, such as earthmovers. As has previously been noted such tires can be built, shaped, molded and cured by various methods which are known and will be readily apparent to those having skill in the art.

This invention is illustrated by the following examples. Unless specifically indicated otherwise, parts and percentages are given by weight.

### Examples 1-8

In this series of experiments seven experimental wire coat formulations were prepared, coating onto a test wire, cured and evaluated to determine original adhesion and adhesion after being aged for 10 days and 20 days at a temperature of 90ºC in a humidity chamber. A control sample was also formulated and evaluated for comparative purposed. In the procedure used non-productive formulations were made by mixing the ingredients identified in Table 1 at the levels indicated along with lignin and a cobalt salt at the levels indicated in Table 2.

**Table 1 - Non-Productive Compound Formulations**

| Ingredient | Level (phr) |
|---|---|
| natural rubber | 50.0 |
| synthetic polyisoprene rubber | 50.0 |
| carbon black¹ | 55.0 or 60.0 |
| tackifier resin | 2.5 |
| formaldehyde resin | 2.0 |
| antioxidant | 1.0 |
| paraffinic oil | 1.5 |
| zinc oxide | 5.0 |
| oleic acid | 1.0 |

1 - It should be noted that in Examples 1-3 and 8 carbon black was incorporated at a level of 60.0 phr with the carbon black only being incorporated at a level of 55.0 phr in Examples 4-7.

Productive compound formulations were then made by mixing the ingredients identified in Table 2 into the non-productive formulations at the levels indicated in Table 2.

**Table 2 - Productive Compound Formulations**

| Ingredient | Level (phr) |
|---|---|
| resin | 2.8 |
| antioxidant | 0.75 |
| zinc oxide | 3.0 |
| insoluble sulfur | 3.0 |
| primary accelerator | 0.72 |
| secondary accelerator | 0.72 |

The formulations in this series of experiments differed in the level of lignin, if any, and the level of the cobalt salt, if any, that was added in the non-productive stage. The level of lignin and the cobalt salt that was added to the wire coat stock formulation is shown in Table 3. Table 3 also shows the level of original rubber-to-metal adhesion and aged rubber-to-metal adhesion that was retained in cured samples after being aged at a temperature of 90ºC for 10 days and 20 days in a humidity chamber. The adhesion values reported in Table 3 are reported in wire coverage as determined by standard wire adhesion testing. These standard wire adhesion tests (SWAT) were conducted by embedding a single brass-plated cord in the respective rubber compositions. The rubber articles were then cured at 170°C for 11 minutes and aged under various conditions. The steel cord in these rubber compositions were then subjected to a pull-out test, according to ASTM Standard D2229-73.

**Table 3**

| Example | Lignin | cobalt salt | Original Adhesion | 10 Day Aged Adhesion | 20 Day Aged Adhesion |
|---|---|---|---|---|---|
| 1 | 0.0 phr | 1.35 phr | 90% | 60% | 20% |
| 2 | 0.0 phr | 0.68 phr | 90% | 75% | 10% |
| 3 | 0.0 phr | 0.0 phr | 95% | 10% | 20% |
| 4 | 10.0 phr | 1.35 phr | 100% | 75% | 10% |
| 5 | 10.0 phr | 0.68 phr | 100% | 95% | 95% |
| 6 | 10.0 phr | 0.0 phr | 100% | 70% | 80% |
| 7 | 0.0 phr | 0.0 phr | 100% | 20% | 20% |
| 8 | 10.0 phr | 0.0 phr | 100% | 60% | 75% |

As can be seen by reviewing Table 3, all of the wire coat stocks made in this series of experiments, including the formulations that did not contain any lignin and/or cobalt salt, attained good original rubber-to-metal adhesion. However, only the formulations that contained lignin maintained a high level of rubber-to-metal adhesion after 20 days of humidity aging. In fact, after 20 days of humidity aging all of the formulations that were void of lignin retained only 20 percent or less wire coverage. This is in contrast to the wire coat stock formulations containing lignin which retained at least 75 percent wire coverage with the exception of the formulation made in Example 4 which contained a high level of the cobalt compound. It would appear as if the high level of the cobalt compound destroyed the aged rubber-to-metal adhesion after the 20 day test period. On the other hand, the cobalt compound appeared to work synergistically with the lignin at the lower level utilized in Example 5. Thus, in cases where cobalt compounds are include in the wire coat stocks of this invention it is important to limit the level of the cobalt compound to a maximum of 1.0 phr.

The wire coat stock formulation made in Example 8 which contained 10 phr of lignin and was void of cobalt compounds offered excellent original adhesion and retained good aged adhesion after 10 days and 20 days of humidity aging. This example shows that it is not necessary to include a cobalt compound in the wire coat stock formulations of this invention. However, to attain the very best results a cobalt compound will be included in the wire coat stock formulation at a level of 0.2 phr to 1.0 phr.

The force required to pull the wires out of the respective rubber formulations in the adhesion testing is reported in Table 4. These test results also show the increased level of retained rubber-to-metal adhesion that is realized by including lignin in the wire coat stock. In fact, Example 6 shows that 100% of the original level of rubber-to-metal adhesion was retained after 20 days of humidity aging. The level of adhesion found after 20 days of humidity aging in Example 8 was also good with the pull out force required being higher than in any of the other formulations with the exception of Example 6. Accordingly, this testing also confirmed the benefit which is realized by including lignin in wire coat formulations. It also shows that good adhesion and aged adhesion can be attained without including a cobalt salt in the wire coat stock.

**Table 4**

| Example | Lignin | cobalt salt | Original Adhesion | 10 Day Aged Adhesion | 20 Day Aged Adhesion |
|---|---|---|---|---|---|
| 1 | 0.0 phr | 1.35 phr | 659 N | 457 N | 343 N |
| 2 | 0.0 phr | 0.68 phr | 695 N | 593 N | 461 N |
| 3 | 0.0 phr | 0.0 phr | 715 N | 463 N | 439 N |
| 4 | 10.0 phr | 1.35 phr | 556 N | 596 N | 423 N |
| 5 | 10.0 phr | 0.68 phr | 552 N | 516 N | 433 N |
| 6 | 10.0 phr | 0.0 phr | 506 N | 550 N | 506 N |
| 7 | 0.0 phr | 0.0 phr | 607 N | 430 N | 389 N |
| 8 | 10.0 phr | 0.0 phr | 569 N | 476 N | 476 N |

## Claims

1. A wire coat stock composition comprising a rubbery polymer, 40 phr to 80 phr of carbon black, 2 phr to 30 phr of lignin, and a cobalt compound, wherein the lignin is a naturally occurring polymer.

2. The wire coat stock as specified in claim 1 wherein the rubbery polymer includes at least 50 weight percent natural rubber or at least 80 weight percent of natural rubber and/or synthetic polyisoprene rubber.

3. The wire coat stock as specified in claim 1 or 2 wherein the lignin is present in the wire coat stock at a level which is within the range of 4 phr to 20 phr or within the range of 7 phr to 15 phr.

4. The wire coat stock as specified in at least one of the previous claims wherein the carbon black is present in the wire coat stock at a level which is within the range of 45 phr to 70 phr or within the range of 50 phr to 65 phr.

5. The wire coat stock as specified in at least one of the previous claims wherein the rubbery polymer includes at least 90 weight percent natural rubber and/or systhetic polyisoprene rubber.

6. The wire coat stock as specified in at least one of the previous claims wherein the lignin is present in the wire coat stock at a level which is within the range of 8 phr to 12 phr.

7. The wire coat stock as specified in at least one of the previous claims wherein the rubbery polymer consists essentially of natural rubber and/or synthetic polyisoprene rubber.

8. The wire coat stock as specified in at least one of the previous claims wherein the cobalt compound is an organo-cobalt compound which is present at a level which is within the range of 0.1 phr to 1.5 phr.

9. A composite comprising a cured rubber composition with a steel reinforcing element embedded therein, wherein the rubber composition comprises a rubbery polymer, 40 phr to 80 phr of carbon black, and 2 phr to about 30 phr of lignin, wherein the steel reinforcing element is coated or plated with a transition metal or a transition metal alloy.

10. The composite of claim 9 wherein the rubber composition is or comprises a wire coat stock composition in accordance with at least one of the claims 1 to 8.

11. The composite as specified in claim 9 or 10 wherein the steel reinforcing element comprises brass coated steel and/or is in the form of a wire or a bead.

12. A pneumatic tire comprising a generally toroidal-shaped carcass with an outer circumferential tread, two spaced beads, at least one ply and sidewalls extending radially from and connecting the tread to the beads, wherein the tread is adapted to be ground-contacting, wherein the beads comprise steel, and wherein the beads are coated with the wire coat stock composition in accordance with at least one of the claims 1 to 8 and/or wherein the tire comprises one or more steel reinforced plies which are coated with the wire coat stock composition in accordance with at least one of the claims 1 to 8.

13. The tire of claim 12 wherein the tire is a truck tire or an earthmover tire, wherein the tire comprises cords which preferably contain at least ten cabled filaments, and wherein the cords are coated with the wire coat stock composition in accordance with at least one of the claims 1 to 8.

14. A pneumatic tire comprising a generally toroidal-shaped carcass with an outer circumferential tread, two spaced beads, at least one ply preferably extending from bead to bead, sidewalls extending radially from and connecting the tread to the beads, and an innerliner which at least partially covers the inner surface of the pneumatic tire, wherein the tread is adapted to be ground-contacting, wherein the innerliner and/or a layer located between the innerliner and the tread, preferably a barrier layer located between the innerliner and the ply or located between the ply or located between the ply and a belt layer of the tire, comprises a halobutyl rubber, a filler and lignin, and wherein the lignin is a naturally occurring polymer.

15. The tire of claim 14 wherein the tire comprises one or more steel reinforced belts.

## Patentansprüche

1. Drahtüberzugmaterialzusammensetzung, umfassend ein gummiartiges Polymer, 40 ThK bis 80 ThK Carbon Black, 2 ThK bis 30 ThK Lignin, und eine Kobaltverbindung, wobei das Lignin ein natürlich vorkommendes Polymer ist.

2. Drahtüberzugmaterial, wie in Anspruch 1 spezifiziert, wobei das gummiartige Polymer mindestens 50 Gewichtsprozent Naturkautschuk oder mindestens 80 Gewichtsprozent Naturkautschuk und/oder synthetischen Polyisoprenkautschuk beinhaltet.

3. Drahtüberzugmaterial, wie in Anspruch 1 oder 2 spezifiziert, wobei das Lignin in dem Drahtüberzugmaterial in einer Menge vorhanden ist, die im Bereich von 4 ThK bis 20 ThK oder im Bereich von 7 ThK bis 15 ThK liegt.

4. Drahtüberzugmaterial, wie in mindestens einem der vorgenannten Ansprüche spezifiziert, wobei das Carbon Black in dem Drahtüberzugmaterial in einer Menge vorhanden ist, die im Bereich von 45 ThK bis 70 ThK oder im Bereich von 50 ThK bis 65 ThK liegt.

5. Drahtüberzugmaterial, wie in mindestens einem der vorgenannten Ansprüche spezifiziert, wobei das gummiartige Polymer mindestens 90 Gewichtsprozent Naturkautschuk und/oder synthetischen Polyisoprenkautschuk beinhaltet.

6. Drahtüberzugmaterial, wie in mindestens einem der vorgenannten Ansprüche spezifiziert, wobei das Lignin in dem Drahtüberzugmaterial in einer Menge vorhanden ist, die im Bereich von 8 ThK bis 12 ThK liegt.

7. Drahtüberzugmaterial, wie in mindestens einem der vorgenannten Ansprüche spezifiziert, wobei das gummiartige Polymer im Wesentlichen aus Naturkautschuk und/oder synthetischem Polyisoprenkautschuk besteht.

8. Drahtüberzugmaterial, wie in mindestens einem der vorgenannten Ansprüche spezifiziert, wobei die Kobaltverbindung eine Organokobaltverbindung ist, die in einer Menge vorhanden ist, die im Bereich von 0,1 ThK bis 1,5 ThK liegt.

9. Verbundwerkstoff, umfassend eine vulkanisierte Kautschukzusammensetzung mit einem darin eingebetteten Stahlverstärkungselement, wobei die Kautschukzusammensetzung ein gummiartiges Polymer, 40 ThK bis 80 ThK Carbon Black, und 2 ThK bis etwa 30 ThK Lignin umfasst, wobei das Stahlverstärkungselement mit einem Übergangsmetall oder einer Übergangsmetalllegierung beschichtet oder plattiert ist.

10. Verbundwerkstoff nach Anspruch 9, wobei die Kautschukzusammensetzung eine Drahtüberzugmaterialzusammensetzung gemäß einem der Ansprüche 1 bis 8 ist oder umfasst.

11. Verbundwerkstoff nach Anspruch 9 oder 10, wobei das Stahlverstärkungselement messingbeschichteten Stahl umfasst und/oder in Form eines Drahts oder eines Wulsts vorliegt.

12. Luftreifen, umfassend eine generell kreisringförmige Karkasse mit einer äußeren umfangsgerichteten Lauffläche, zwei beabstandeten Wülsten, mindestens einer Karkassenlage und Seitenwänden, die sich radial von der Lauffläche erstrecken und diese mit den Wülsten verbinden, wobei die Lauffläche zum Inkontaktkommen mit dem Boden eingerichtet ist, wobei die Wülste Stahl umfassen, und wobei die Wülste mit der Drahtüberzugmaterialzusammensetzung gemäß mindestens einem der Ansprüche 1 bis 8 beschichtet sind und/oder wobei der Reifen ein oder mehr stahlverstärkte Karkassenlagen umfasst, die mit der Drahtüberzugmaterialzusammensetzung gemäß mindestens einem der Ansprüche 1 bis 8 beschichtet sind.

13. Reifen nach Anspruch 12, wobei der Reifen ein Lastkraftwagenreifen oder ein Erdbewegungsmaschinenreifen ist, wobei der Reifen Korde umfasst, die bevorzugt mindestens zehn verseilte Filamente enthalten, und wobei die Korde mit der Drahtüberzugmaterialzusammensetzung gemäß mindestens einem der Ansprüche 1 bis 8 beschichtet sind.

14. Luftreifen, umfassend eine generell kreisringförmige Karkasse mit einer äußeren umfangsgerichteten Lauffläche, zwei beabstandeten Wülsten, mindestens einer sich bevorzugt von Wulst zu Wulst erstreckenden Karkassenlage, Seitenwänden, die sich radial von der Lauffläche erstrecken und diese mit den Wülsten verbinden, und einer Innenisolierung, die mindestens teilweise die Innenseite des Luftreifens bedeckt, wobei die Lauffläche zum Inkontaktkommen mit dem Boden eingerichtet ist, wobei die Innenisolierung und/oder eine zwischen der Innenisolierung und der Lauffläche befindliche Schicht, bevorzugt eine Barriereschicht, die zwischen der Innenisolierung und der Karkassenlage angeordnet ist oder zwischen der Karkassenlage angeordnet ist oder zwischen der Karkassenlage und einer Gürtellage des Reifens angeordnet ist, einen Halobutylkautschuk, einen Füllstoff und Lignin umfasst, und wobei das Lignin ein natürlich vorkommendes Polymer ist.

15. Reifen nach Anspruch 14, wobei der Reifen ein oder mehr stahlverstärkte Gürtel umfasst.

## Revendications

1. Composition de matière d'alimentation d'enrobage de fil métallique comprenant un polymère caoutchouteux, de 40 phr à 80 phr de noir de carbone, de 2 phr à 30 phr de lignine, et un composé à base de cobalt, la lignine représentant un polymère existant naturellement.

2. Matière d'alimentation d'enrobage de fil métallique telle que spécifiée dans la revendication 1, dans laquelle le polymère caoutchouteux englobe au moins 50 % en poids de caoutchouc naturel ou au moins 80 % en poids de caoutchouc naturel et/ou de caoutchouc de polyisoprène synthétique.

3. Matière d'alimentation d'enrobage de fil métallique telle que spécifiée dans la revendication 1 ou 2, dans laquelle la lignine est présente dans la matière d'alimentation d'enrobage de fil métallique en une teneur qui se situe dans la plage de 4 phr à 20 phr ou bien dans la plage de 7 phr à 15 phr.

4. Matière d'alimentation d'enrobage de fil métallique telle que spécifiée dans au moins une des revendications précédentes, dans laquelle le noir de carbone est présent dans la matière d'alimentation d'enrobage de fil métallique en une teneur qui se situe dans la plage de 45 phr à 70 phr ou bien dans la plage de 50 phr à 65 phr.

5. Matière d'alimentation d'enrobage de fil métallique telle que spécifiée dans au moins une des revendications précédentes, dans laquelle le polymère caoutchouteux englobe au moins 90 % en poids de caoutchouc naturel et/ou de caoutchouc de polyisoprène synthétique.

6. Matière d'alimentation d'enrobage de fil métallique telle que spécifiée dans au moins une des revendications précédentes, dans laquelle la lignine est présente dans la matière d'alimentation d'enrobage de fil métallique en une teneur qui se situe dans la plage de 8 phr à 12 phr.

7. Matière d'alimentation d'enrobage de fil métallique telle que spécifiée dans au moins une des revendications précédentes, dans laquelle le polymère caoutchouteux est constitué essentiellement de caoutchouc naturel et/ou de caoutchouc de polyisoprène synthétique.

8. Matière d'alimentation d'enrobage de fil métallique telle que spécifiée dans au moins une des revendications précédentes, dans laquelle le composé à base de cobalt est un composé d'organocobalt qui est présent en une teneur qui se situe dans la plage de 0,1 phr 1,5 phr.

9. Composite comprenant une composition de caoutchouc vulcanisé dans laquelle est incorporé un élément de renforcement en acier, la composition de caoutchouc comprenant un polymère caoutchouteux, de 40 phr à 80 phr de noir de carbone et de 2 phr à 30 phr de lignine, l'élément de renforcement en acier étant enrobé ou plaqué avec un métal de transition ou un alliage de métal de transition.

10. Composite selon la revendication 9, dans lequel la composition de caoutchouc est ou représente une composition de matière d'alimentation d'enrobage de fil métallique selon au moins une des revendications 1 à 8.

11. Composite tel que spécifié à la revendication 9 ou 10, dans lequel l'élément de renforcement en acier comprend de l'acier plaqué au laiton et/ou se présente sous la forme d'un fil métallique ou d'un talon.

12. Bandage pneumatique comprenant une carcasse de configuration généralement toroïdale comportant une bande de roulement circonférentielle externe, deux talons espacés, au moins une nappe et des flancs s'étendant en direction radiale à partir de la bande de roulement et reliant la bande de roulement aux talons, la bande de roulement étant conçue pour entrer en contact avec le sol, dans lequel les talons comprennent de l'acier et dans lequel les talons sont enrobés avec la composition de matière d'alimentation d'enrobage de fil métallique selon au moins une des revendications 1 à 8 et/ou dans lequel le bandage pneumatique comprend une ou plusieurs nappes renforcées avec de l'acier qui sont recouvertes avec la composition de matière d'alimentation d'enrobage de fil métallique selon au moins une des revendications 1 à 8.

13. Bandage pneumatique selon la revendication 12, dans lequel le bandage pneumatique est un bandage pneumatique pour camion ou un bandage pneumatique pour engin de terrassement, le bandage pneumatique comprenant des câblés qui contiennent de préférence au moins dix filaments torsadés, et dans lequel les câblés sont enrobés avec la composition de matière d'alimentation d'enrobage de fil métallique selon au moins une des revendications 1 à 8.

14. Bandage pneumatique comprenant une carcasse de configuration généralement toroïdale comportant une bande de roulement circonférentielle externe, deux talons espacés, au moins une nappe s'étendant de préférence d'un talon à l'autre, des flancs s'étendant en direction radiale à partir de la bande de roulement et reliant la bande de roulement aux talons, et un calandrage intérieur qui recouvre au moins en partie la surface interne du bandage pneumatique, la bande de roulement étant conçue pour entrer en contact avec le sol, dans lequel le calandrage intérieur et/ou une couche située entre le calandrage intérieur et la bande de roulement, de préférence une couche d'arrêt disposée entre le calandrage intérieur et la nappe ou bien disposée entre la nappe et une couche de ceinture du bandage pneumatique, comprend un caoutchouc halogénobutyle, une matière de charge et de la lignine, la lignine représentant un polymère existant naturellement.

15. Bandage pneumatique selon la revendication 14, dans lequel le bandage pneumatique comprend une ou plusieurs ceintures renforcées avec de l'acier.
